# FASCICULE DE BREVET EUROPEEN

(11) **EP 2 955 112 B1**
(45) Date de publication et mention de la délivrance du brevet: **04.01.2017**
(21) Numéro de dépôt: 15171344.3
(22) Date de dépôt: 10.06.2015
(51) Int. Cl.: B64D 33/02, F02C 7/045, B64C 7/02, B64C 21/10

(54) **NACELLE D'AERONEF COMPRENANT UNE ENTREE D'AIR**
LUFTFAHRZEUGGONDEL, DIE EINEN LUFTEINLASS UMFASST
AIRCRAFT NACELLE INCLUDING AN AIR INTAKE

(30) Priorité: 12.06.2014 FR 1455341
(43) Date de publication de la demande: 16.12.2015
(73) Titulaire: AIRBUS OPERATIONS (SAS), 31060 Toulouse (FR)
(72) Inventeur: Rouyre, François, 31700 CORNEBARRIEU (FR)
(74) Mandataire: Fantin, Laurent

(56) Documents cités:
- EP-A2- 1 607 603
- EP-A2- 2 607 657
- WO-A2-91/01034
- GB-A- 1 171 508
- US-A- 3 664 612
- US-A1- 2011 006 165

## Description

La présente invention se rapporte à une nacelle d'aéronef comprenant une entrée d'air améliorée.

Une nacelle d'aéronef est connue de US 3 664 612, qui est considéré comme l'art antérieur le plus proche et décrit les caractéristiques du préambule de la revendication 1.

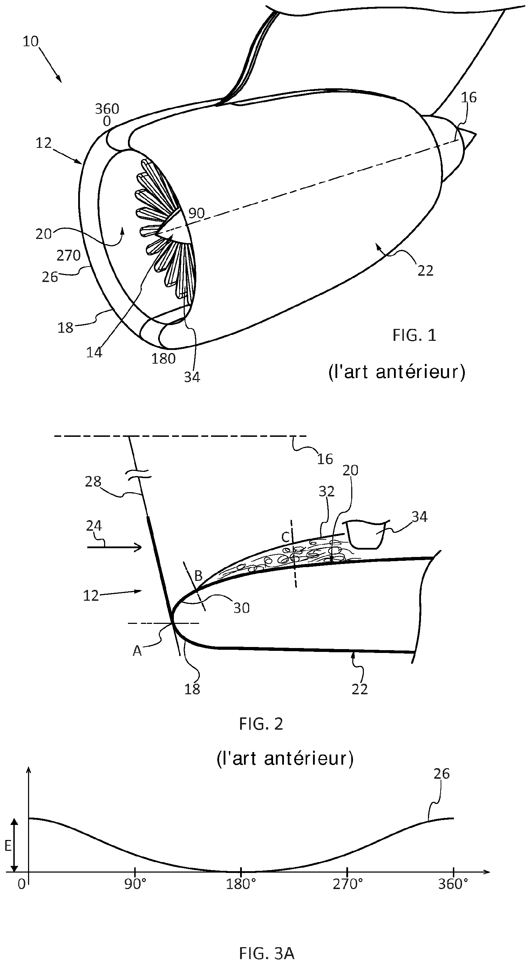

Comme représenté sur la figure 1, une nacelle d'aéronef 10 comprend à l'avant une entrée d'air 12 permettant de canaliser un flux d'air en direction d'une motorisation, une première partie du flux d'air entrant, appelée flux primaire, traversant un turboréacteur pour participer à la combustion, la seconde partie du flux d'air, appelée flux secondaire, étant entrainée par une soufflante 14 et s'écoulant dans un conduit annulaire délimité par la paroi intérieure de la nacelle et la paroi extérieure du turboréacteur.

Pour la suite de la description, la direction longitudinale correspond à la direction de l'axe de rotation 16 de la soufflante 14. Un plan longitudinal est un plan qui passe par l'axe de rotation 16. Un plan transversal est un plan perpendiculaire à l'axe de rotation 16.

Comme illustré sur la figure 2, l'entrée d'air 10 comprend une lèvre 18 dont la surface en contact avec les flux aérodynamiques est prolongée à l'intérieur de la nacelle par un conduit intérieur 20 sensiblement circulaire et à l'extérieur de la nacelle par une paroi extérieure 22 sensiblement circulaire. La lèvre 18 permet de canaliser un flux d'air 24 à l'intérieur du conduit intérieur 20.

Dans un plan longitudinal, l'entrée d'air 12 a une section avec une portion sensiblement rectiligne au niveau du conduit intérieur 20, une portion sensiblement rectiligne au niveau de la paroi extérieure 22 et une portion intermédiaire courbe avec un faible rayon de courbure au niveau de la lèvre 18.

Cette portion intermédiaire courbe a un sommet A qui correspond au point le plus en avant de la lèvre 18. Ce sommet A décrit un profil 26 approximativement circulaire le long de la circonférence de la nacelle 10, comme illustré sur la figure 1. Ce profil 26 correspond au bord d'attaque de l'entrée d'air.

Selon l'art antérieur, ce profil 26 est inscrit dans un plan 28. De préférence, ce plan 28 n'est pas perpendiculaire à l'axe de rotation 16 de la soufflante 14 et forme un angle de l'ordre de 75 à 105° avec cet axe de rotation 16 de sorte que le sommet de l'entrée d'air situé en haut de la nacelle qui correspond à une position angulaire à 0° soit plus en avant que le sommet de l'entrée d'air situé en bas de la nacelle qui correspond à une position angulaire à 180°.

Sur la figure 3A, on a représenté le profil 26 déployé décrit par le sommet A par rapport à un plan de référence perpendiculaire à l'axe de rotation 16 de la soufflante 14.

Le plan 28 étant incliné par rapport à l'axe de rotation 16, le profil 26 décrit approximativement une seule sinusoïde avec une amplitude E qui correspond à l'écart selon la direction longitudinale entre le sommet de l'entrée d'air situé en haut de la nacelle et celui situé en bas.

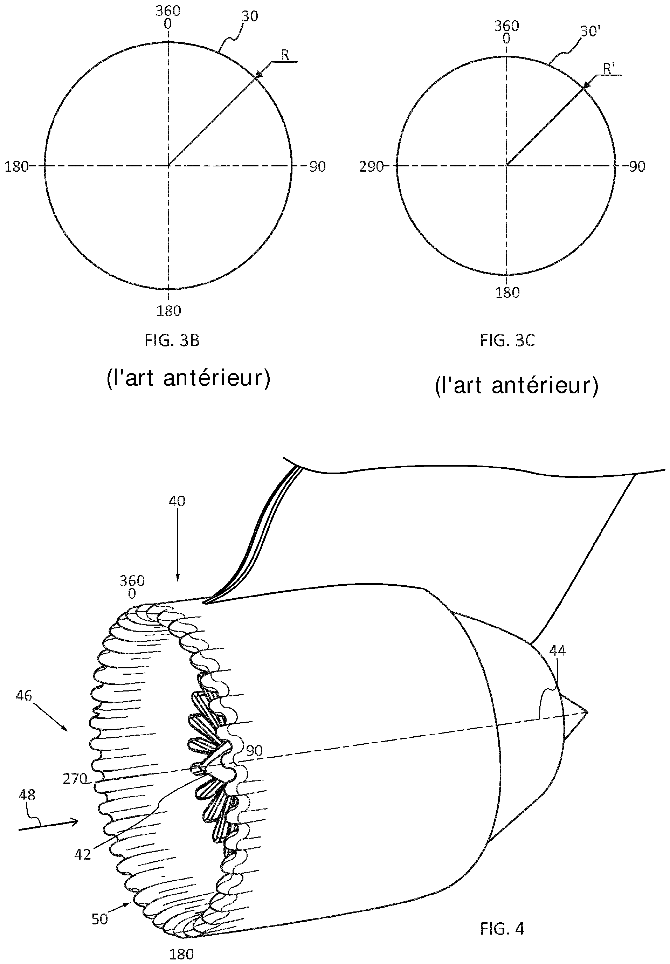

Sur les figures 3B et 3C, on a représenté respectivement une coupe transversale du conduit intérieur 20 en un point B de l'entrée d'air et en un point C de l'entrée d'air.

Les points B et C décrivent chacun approximativement un cercle respectivement de rayon R et de rayon R', comme illustré sur les figures 3B et 3C.

Lorsque le flux d'air pénètre dans l'entrée d'air 12, en fonction de la phase de vol de l'avion (montée, croisière, descente), un décollement du flux d'air peut se produire au niveau de la zone de jonction entre la lèvre 18 et le conduit intérieur 20, provoquant une augmentation de l'épaisseur de la couche limite 32 en surface du conduit intérieur 20, comme illustré sur la figure 2. L'épaisseur de la couche limite 32 étant supérieure au jeu prévu entre le conduit intérieur 20 et les extrémités des pales 34, ces dernières ne sont pas dans un flux laminaire longitudinal mais interfèrent avec la couche limite 32. L'interaction des extrémités des pales 34 et des flux turbulents de la couche limite 32 génère une source de bruit.

Pour limiter l'impact des nuisances sonores, des techniques ont été développées pour réduire le bruit, notamment en disposant, au niveau des parois du conduit intérieur 20, des panneaux ou revêtements visant à absorber une partie de l'énergie sonore, notamment en utilisant le principe des résonateurs d'Helmholtz.

Même si ces panneaux ou revêtements sont performants, ils ne font qu'atténuer les bruits émis par certaines sources de la motorisation et ne visent pas à limiter leurs apparitions.

La présente demande vise à améliorer les caractéristiques aérodynamiques de l'entrée d'air pour limiter l'apparition de bruits.

A cet effet, l'invention a pour objet une nacelle d'aéronef comprenant une entrée d'air configurée pour canaliser un flux d'air en direction d'une motorisation qui comprend une soufflante avec un axe de rotation, ladite entrée d'air comprenant, selon un sens d'écoulement du flux d'air, une lèvre avec un bord d'attaque et un conduit intérieur qui prolonge ladite lèvre vers la soufflante, caractérisée en ce que l'entrée d'air comprend une pluralité de bosses réparties sur la circonférence de l'entrée d'air et après chaque bosse une forme concave configurée pour obtenir une compression du flux d'air.

Cette compression provoque une accélération du flux d'air en contact avec le conduit intérieur et donc une réduction de l'épaisseur de la couche limite en surface du conduit intérieur. De la sorte, les extrémités des pales n'interfèrent plus avec les flux turbulents de la couche limite ce qui limite l'apparition de bruits.

Avantageusement, chaque bosse a, dans le sens d'écoulement du flux d'air, un profil tel que le diamètre de l'entrée d'air diminue de manière continue depuis un pied aval de la bosse jusqu'à un sommet de la bosse puis augmente de manière continue du sommet de la bosse jusqu'à la forme concave.

Selon une autre caractéristique, chaque forme concave a un point bas qui est distant de l'axe de rotation d'une distance égale au rayon du conduit intérieur dans un même plan transversal. De préférence, l'entrée d'air comprend au moins trente-deux bosses réparties de manière régulière sur sa circonférence.

Selon d'autres caractéristiques :
- les bosses sont réparties dans un plan parallèle au bord d'attaque ;
- les bosses sont disposées au niveau d'une zone de jonction entre la lèvre et le conduit intérieur ;
- les bosses forment dans un plan parallèle au bord d'attaque une succession de formes en creux et de formes en saillie avec un profil sinusoïdal ;
- chaque bosse a une hauteur comprise entre 1 et 5 cm ;
- chaque bosse comprend un sommet et un pied amont séparés d'une distance selon une direction parallèle à l'axe de rotation inférieure ou égale à deux fois la hauteur.

Avantageusement, le bord d'attaque a un profil qui comprend de manière alternée des formes en creux et des formes en saillie, une forme en saillie étant séparée de la soufflante d'une distante plus importante que les formes en creux adjacente.

De préférence, le profil du bord d'attaque décrit une succession de formes en creux et de formes en saillie réparties de part et d'autre d'un plan qui forme un angle de 75 à 105° par rapport à l'axe de rotation de la soufflante.

Selon un mode de réalisation, les formes en saillie ont un rayon de courbure inférieur au rayon de courbure des formes en creux.

D'autres caractéristiques et avantages ressortiront de la description qui va suivre de l'invention, description donnée à titre d'exemple uniquement, en regard des dessins annexés sur lesquels :
- La figure 1 est une vue en perspective d'une nacelle d'aéronef qui illustre l'art antérieur,
- La figure 2 est une coupe longitudinale d'une partie d'une entrée d'air qui illustre l'art antérieur,
- La figure 3A est une courbe d'un profil déployé du bord d'attaque d'une entrée d'air de l'art antérieur,
- Les figures 3B et 3C sont des coupes transversales en un point B et en un point C d'une entrée d'air de l'art antérieur,
- La figure 4 est une vue en perspective d'une nacelle d'aéronef qui illustre l'invention,
- La figure 5 est une coupe longitudinale d'une partie d'une entrée d'air de la nacelle de la figure 4,
- La figure 6 est une vue en perspective qui illustrent des flux d'air en surface d'un secteur de l'entrée d'air de la nacelle de la figure 4,
- La figure 7A est une courbe qui illustre le profil déployé décrit par le bord d'attaque de l'entrée d'air de la figure 4,
- La figure 7B est une coupe transversale en un point B de l'entrée d'air de la figure 5,
- La figure 7C est une coupe transversale en un point C de l'entrée d'air de la figure 5,
- La figure 8 est une courbe qui illustre un profil déployé décrit par le bord d'attaque d'une entrée d'air selon une autre variante de l'invention,
- La figure 9 est une courbe qui illustre un profil déployé décrit par le bord d'attaque d'une entrée d'air selon une autre variante de l'invention.

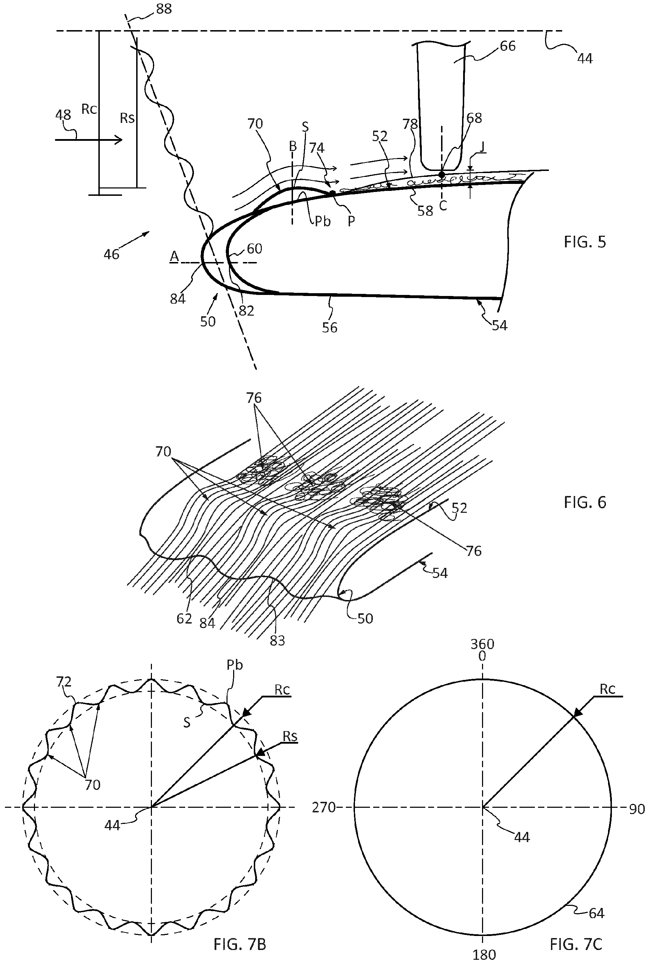

Une nacelle d'aéronef 40 comprend à l'avant une entrée d'air 46 configurée pour canaliser un flux d'air 48 en direction d'une motorisation qui intègre une soufflante 42 avec un axe de rotation 44. Pour la suite, l'axe de rotation 44 correspond à la direction longitudinale. Comme illustré sur la figure 5, l'entrée d'air 46 comprend une lèvre 50, un conduit intérieur 52 sensiblement circulaire qui prolonge la lèvre 50 à l'intérieur de la nacelle. La lèvre 50 est prolongée à l'extérieur de la nacelle par une paroi extérieure 54 sensiblement circulaire. Dans un plan longitudinal visible sur la figure 5, la paroi extérieure et l'entrée d'air 46 ont une section longitudinale qui comprend une première portion rectiligne 56 qui correspond à la paroi extérieure 54, une deuxième portion rectiligne 58 qui correspond à une partie du conduit intérieur 52 et une portion intermédiaire courbe 60 qui correspond à la lèvre 50.

La lèvre 50 comprend un sommet A qui correspond au point le plus en avant de la nacelle pour chaque plan longitudinal. Le sommet A décrit le long de la circonférence de la nacelle une courbe fermée qui forme un bord d'attaque 62. Ce bord d'attaque 62 permet de scinder le flux d'air en deux, un premier flux qui pénètre dans l'entrée d'air 46 et un autre flux d'air qui passe à l'extérieur de la nacelle.

Le conduit intérieur 52 comprend une section transversale (perpendiculaire à la direction longitudinale) au droit de la soufflante 42 circulaire. Ainsi, comme illustré sur la figure 7C, un point C du conduit intérieur 52 décrit un profil 64 circulaire avec un rayon Rc.

La soufflante 42 comprend une pluralité de pales 66 avec chacune une extrémité 68 séparée d'un jeu J du conduit intérieur 52.

Selon une caractéristique de l'invention, l'entrée d'air 46 comprend une pluralité de bosses 70 réparties sur la circonférence de l'entrée d'air 46. Avantageusement, les bosses 70 sont réparties dans un plan parallèle au bord d'attaque 62. Cette succession de bosses 70 forme un profil 72, représenté sur la figure 7B, comprenant une alternance de formes en creux et de formes en saillie.

Chaque forme en creux a un point bas Pb. De préférence, tous les points bas Pb sont disposés sur un même cercle qui est centré sur l'axe de rotation 44 et qui a un rayon égal au rayon Rc du conduit intérieur 52.

Chaque forme en saillie qui correspond à une bosse 70 a un sommet S qui correspond au point le plus haut. De préférence, tous les sommets sont disposés sur le même cercle qui est centré sur l'axe de rotation 44 et qui a un rayon Rs inférieur au rayon Rc.

Avantageusement, chaque bosse 70 a une hauteur de l'ordre de 1 à 5 cm.

Ainsi, l'écart entre les rayons Rc et Rs est de l'ordre de 1 à 5 cm.

Selon une caractéristique de l'invention, l'entrée d'air 46 comprend au moins trente-deux (32) bosses 70 réparties de manière régulière sur la circonférence de l'entrée d'air 46, pour obtenir l'effet escompté.

Selon un mode de réalisation, le profil 72 formé par l'alternance de formes en creux et de formes en saillie est une sinusoïde portée par un cercle de rayon égal à (Rc+Rs)/2. Cependant, l'invention n'est pas limitée à cette géométrie pour les bosses 70.

Selon une autre caractéristique de l'invention, pour chaque bosse 70, le sommet S est disposé sur un cercle de rayon Rs inférieur à celui d'un point P de l'entrée d'air 46 situé juste après la bosse 70. Ainsi, comme représenté sur la figure 5, dans un plan longitudinal, chaque bosse a, dans le sens d'écoulement du flux d'air 48, un profil tel que le diamètre de l'entrée d'air 46 diminue de manière continue depuis un pied aval de la bosse jusqu'à son sommet S puis augmente de manière continue du sommet S jusqu'à un pied amont P de la bosse. De la sorte, l'entrée d'air 46 comprend après chaque bosse 70 une forme concave 74 au niveau du pied amont P configurée pour obtenir une compression 76 (visible sur la figure 6) du flux d'air. Cette compression provoque une accélération du flux d'air en contact avec le conduit intérieur 52 et donc une réduction de l'épaisseur de la couche limite 78 en surface du conduit intérieur 52.

De préférence, chaque forme concave 74 a un point bas qui correspond au point P qui est distant de l'axe de rotation 44 d'une distance égale au rayon du conduit intérieur 52 dans un même plan transversal.

Comme représenté sur la figure 5, cette couche limite 78 a une épaisseur inférieure au jeu J entre les extrémités 68 des pales 66 et le conduit intérieur 52. De la sorte, les extrémités 68 des pales 66 n'interfèrent plus avec les flux turbulents de la couche limite 78 ce qui limite l'apparition de bruits.

De préférence, la distance entre le sommet S et le pied amont P selon la direction longitudinale est inférieure ou égale à deux fois la distance entre le sommet S et le pied amont P selon la direction transversale qui correspond à la hauteur de la bosse.

Avantageusement, les bosses 70 sont positionnées à l'emplacement théorique du décollement du flux d'air en l'absence de bosses. Selon un mode de réalisation, les bosses 70 sont positionnées au niveau de la zone de jonction entre la lèvre 50 et le conduit intérieur 52. Selon un mode de réalisation, chaque bosse 70 a un profil identique dans tous les plans contenant une droite passant par le sommet S et perpendiculaire à l'axe de rotation 44.

La présence des bosses 70 conformes à l'invention au niveau de l'entrée d'air 46 procure les avantages suivants :
Les bosses 70 limitent le décollement du flux d'air entrant dans l'entrée d'air 46 ce qui tend à réduire l'épaisseur de la couche limite 78 en surface du conduit intérieur 52. De la sorte, les extrémités 68 des pales 66 de la soufflante n'interfèrent plus avec les flux turbulents de la couche limite 78 ce qui d'une part réduit l'apparition des bruits, et d'autre part, améliore les performances de la soufflante.

Selon un autre avantage, la succession de formes en creux et en saillie sur la circonférence de l'entrée d'air 46 permet de conserver des flux d'air orientés selon la direction longitudinale et évite qu'ils ne tourbillonnent ce qui contribue également à améliorer les performances de la soufflante.

Selon une autre caractéristique de l'invention illustrée sur les figures 5, 7A, 8 et 9, le bord d'attaque 62 a un profil 80, 80', 80" qui comprend de manière alternée des formes en creux 82 et des formes en saillie 84, une forme en saillie étant séparée de la soufflante d'une distante plus importante que les formes en creux adjacente.

Cette configuration améliore les caractéristiques aérodynamiques de l'entrée d'air.

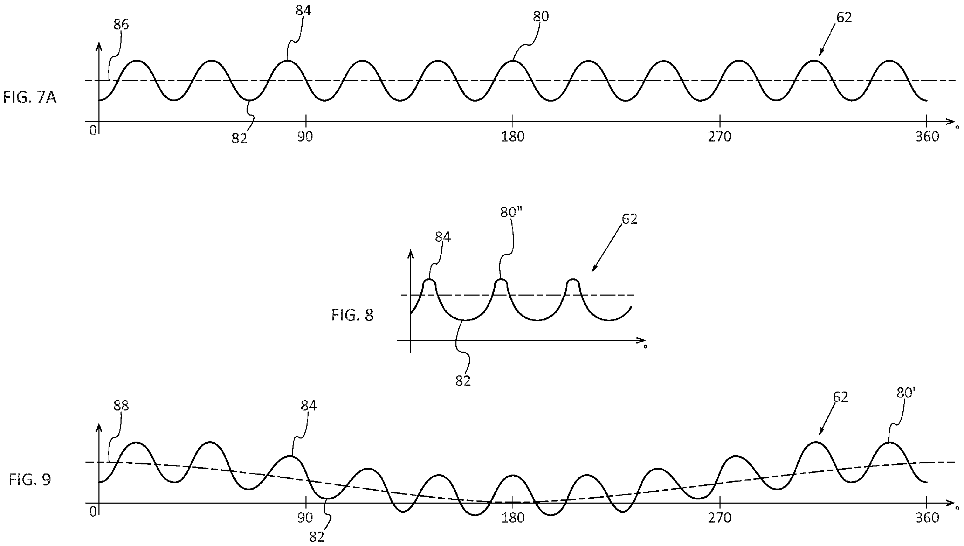

Selon un premier mode de réalisation représenté sur la figure 7A, le profil 80 du bord d'attaque 62 décrit une sinusoïde centrée par rapport à un plan 86 perpendiculaire à l'axe de rotation 44 de la soufflante.

Selon un autre mode de réalisation représenté sur les figures 5 et 9, le profil 80' du bord d'attaque 62 décrit une succession de formes en creux 82 et de formes en saillie 84 réparties de part et d'autre d'un plan 88 qui forme un angle de 75 à 105° par rapport à l'axe de rotation 44 de la soufflante.

Selon un autre mode de réalisation représenté sur la figure 8, les formes en creux 82 et les formes en saillie 84 ne sont pas symétriques. Selon ce mode de réalisation, toutes les formes en creux 82 sont identiques, toutes les formes en saillie 84 sont identiques et les formes en saillie 84 ont un rayon de courbure inférieur au rayon de courbure des formes en creux 82.

## Revendications

1. Nacelle d'aéronef comprenant une entrée d'air (46) configurée pour canaliser un flux d'air (48) en direction d'une motorisation qui comprend une soufflante (42) avec un axe de rotation (44), ladite entrée d'air (46) comprenant, selon un sens d'écoulement du flux d'air (48), une lèvre (50) avec un bord d'attaque (62) et un conduit intérieur (52) qui prolonge ladite lèvre (50) vers la soufflante (42), **caractérisée en ce que** l'entrée d'air (46) comprend une pluralité de bosses (70) réparties sur la circonférence de l'entrée d'air (46) et après chaque bosse (70) une forme concave (74) configurée pour obtenir une compression (76) du flux d'air et **en ce que** chaque bosse (70) a, dans le sens d'écoulement du flux d'air (48), un profil tel que l'entrée d'air (46) a un diamètre qui diminue de manière continue depuis un pied aval de la bosse (70) jusqu'à un sommet (S) de la bosse (70) puis qui augmente de manière continue du sommet (S) jusqu'à un pied amont (P) de la bosse (70).

2. Nacelle d'aéronef selon la revendication 1, **caractérisée en ce que** l'entrée d'air (46) comprend au moins trente-deux bosses (70) réparties de manière régulière sur sa circonférence.

3. Nacelle d'aéronef selon la revendication 1 ou 2, **caractérisée en ce que** les bosses (70) sont réparties dans un plan parallèle au bord d'attaque (62).

4. Nacelle d'aéronef selon l'une des revendications précédentes, **caractérisée en ce que** les bosses (70) sont disposées au niveau d'une zone de jonction entre la lèvre (50) et le conduit intérieur (52).

5. Nacelle d'aéronef selon l'une des revendications précédentes, **caractérisée en ce que** les bosses (70) forment dans un plan parallèle au bord d'attaque (62) une succession de formes en creux et de formes en saillie avec un profil (72) sinusoïdal.

6. Nacelle d'aéronef selon l'une des revendications précédentes, **caractérisée en ce que** chaque bosse a une hauteur comprise entre 1 et 5 cm.

7. Nacelle d'aéronef selon la revendication 6, **caractérisée en ce que** le sommet (S) de la bosse (70) et le pied amont (P) de la bosse (70) sont séparés d'une distance selon une direction parallèle à l'axe de rotation (44) inférieure ou égale à deux fois la hauteur.

8. Nacelle d'aéronef selon l'une des revendications précédentes **caractérisée en ce que** le bord d'attaque (62) a un profil (80, 80', 80") qui comprend de manière alternée des formes en creux (82) et des formes en saillie (84), une forme en saillie étant séparée de la soufflante d'une distante plus importante que les formes en creux adjacente.

9. Nacelle d'aéronef selon la revendication 8, **caractérisée en ce que** le profil (80') du bord d'attaque (62) décrit une succession de formes en creux (82) et de formes en saillie (84) réparties de part et d'autre d'un plan (88) qui forme un angle de 75 à 105° par rapport à l'axe de rotation (44) de la soufflante.

10. Nacelle d'aéronef selon la revendication 8 ou 9, **caractérisée en ce que** les formes en saillie (84) ont un rayon de courbure inférieur au rayon de courbure des formes en creux (82).

## Patentansprüche

1. Gondel eines Luftfahrzeugs mit einem Lufteinlass (46), der dazu eingerichtet ist, einen Luftstrom (48) in Richtung einer Motorisierung zu kanalisieren, die ein Gebläse (42) mit einer Rotationsachse (44) aufweist, wobei der Lufteinlass (46) in eine Strömungsrichtung des Luftstroms (48) einen Wulst (50) mit einer Anströmkante (62) und einen inneren Kanal (52) aufweist, der den Wulst (50) zum Gebläse (42) hin verlängert, **dadurch gekennzeichnet, dass** der Lufteinlass (46) eine Vielzahl von Buckeln (70) aufweist, die um den Umfang des Lufteinlasses (46) verteilt sind, und hinter jedem Buckel (70) eine konkave Form (74) aufweist, die dazu eingerichtet ist, eine Kompression (76) des Luftstroms aufzunehmen, und dass jeder Buckel (70) in Strömungsrichtung des Luftstroms (48) über ein derartiges Profil verfügt, dass der Lufteinlass (46) einen Durchmesser hat, der sich auf kontinuierliche Weise von einer tiefgelegenen Basis des Buckels (70) aus bis zu einer Spitze (S) des Buckels (70) verringert und der sich dann auf kontinuierliche Weise von der Spitze (S) bis zu einer hochgelegenen Basis (P) des Buckels (70) vergrößert.

2. Gondel eines Luftfahrzeugs nach Anspruch 1, **dadurch gekennzeichnet, dass** der Lufteinlass (46) wenigstens zweiunddreißig Buckel (70) aufweist, die auf regelmäßige Weise über dessen Umfang verteilt sind.

3. Gondel eines Luftfahrzeugs nach Anspruch 1 oder 2, **dadurch gekennzeichnet, dass** die Buckel (70) in einer zur Anströmkante (62) parallelen Ebene verteilt sind.

4. Gondel eines Luftfahrzeugs nach einem der vorhergehenden Ansprüche, **dadurch gekennzeichnet, dass** die Buckel (70) im Bereich einer Verbindungszone zwischen dem Wulst (50) und dem inneren Kanal (52) angeordnet sind.

5. Gondel eines Luftfahrzeugs nach einem der vorhergehenden Ansprüche, **dadurch gekennzeichnet, dass** die Buckel (70) in einer zur Anströmkante (62) parallelen Ebene eine Folge von hohlen und vorspringenden Formen mit einem sinusförmigen Profil (72) bilden.

6. Gondel eines Luftfahrzeugs nach einem der vorhergehenden Ansprüche, **dadurch gekennzeichnet, dass** jeder Buckel eine Höhe zwischen 1 und 5 cm hat.

7. Gondel eines Luftfahrzeugs nach Anspruch 6, **dadurch gekennzeichnet, dass** die Spitze (S) des Buckels (70) und die höhergelegene Basis (P) des Buckels (70) sich in einer zur Rotationsachse (44) parallelen Richtung in einem Abstand befinden, der kleiner gleich dem zweifachen Höhenunterschied ist.

8. Gondel eines Luftfahrzeugs nach einem der vorhergehenden Ansprüche, **dadurch gekennzeichnet, dass** die Anströmkante (62) über ein Profil (80, 80', 80") verfügt, das abwechselnd hohle Formen (82) und vorspringende Formen (84) aufweist, wobei sich eine vorspringende Form vom Gebläse in einem größeren Abstand befindet, als die benachbarten hohlen Formen.

9. Gondel eines Luftfahrzeugs nach Anspruch 8, **dadurch gekennzeichnet, dass** das Profil (80') der Anströmkante (62) eine Abfolge von hohlen Formen (82) und vorspringenden Formen (84) beschreibt, die beidseits einer Ebene (88) verteilt sind, die einen Winkel von 75 bis 105° bezüglich der Rotationsachse (44) des Gebläses einnimmt.

10. Gondel eines Luftfahrzeugs nach Anspruch 8 oder 9, **dadurch gekennzeichnet, dass** die vorspringenden Formen (84) einen Krümmungsradius haben, der kleiner als der Krümmungsradius der hohlen Formen (82) ist.

## Claims

1. Aircraft nacelle comprising an air intake (46) configured to channel an air flow (48) in the direction of an engine assembly which comprises a fan (42) with an axis of rotation (44), said air intake (46) comprising, according to a flow direction of the air flow (48), a lip (50) with a leading edge (62) and an internal conduit (52) which extends said lip (50) towards the fan (42), **characterized in that** the air intake (46) comprises a plurality of protrusions (70) distributed over the circumference of the air intake (46) and after each protrusion (70) a concave form (74) configured in order to achieve compression (76) of the air flow and **in that** each protrusion (70) has, in the flow direction of the air flow (48), a profile such that the diameter of the air intake (46) diminishes continuously from a downstream low point of the protrusion (70) to a summit (S) of the protrusion (70) then increases continuously from the summit (S) of the protrusion (70) to a upstream low point (P) of the protrusion (70).

2. Aircraft nacelle according to claim 1, **characterized in that** the air intake (46) comprises at least thirty-two protrusions (70) distributed at regular intervals over its circumference.

3. Aircraft nacelle according to claim 1 or 2, **characterized in that** the protrusions (70) are distributed in a plane parallel to the leading edge (62).

4. Aircraft nacelle according to one of the preceding claims, **characterized in that** the protrusions (70) are disposed at a junction zone between the lip (50) and the internal conduit (52).

5. Aircraft nacelle according to one of the preceding claims, **characterized in that** the protrusions (70) form a succession of hollow forms and projecting forms with a sinusoidal profile (72) in a plane parallel to the leading edge (62).

6. Aircraft nacelle according to one of the preceding claims, **characterized in that** each protrusion has a height of between 1 and 5 cm.

7. Aircraft nacelle according to Claim 6, **characterized in that** the summit of the protrusion (70) and the upstream low point (P) are separated by a distance in a direction parallel to the axis of rotation (44) that is shorter than or equal to twice the height.

8. Aircraft nacelle according to one of the preceding claims, **characterized in that** the leading edge (62) has a profile (80, 80', 80") alternately comprising hollow forms (82) and projecting forms (84), a projecting form being separated from the fan by a greater distance than the adjacent hollow forms.

9. Aircraft nacelle according to Claim 8, **characterized in that** the profile (80') of the leading edge (62) describes a succession of hollow forms (82) and of projecting forms (84) distributed on both sides of a plane (88) that forms an angle of between 75 and 105° relative to the axis of rotation (44) of the fan.

10. Aircraft nacelle according to Claim 8 or 9, **characterized in that** the projecting forms (84) have a bending radius smaller than the bending radius of the hollow forms (82).
